(19) Europäisches Patentamt / European Patent Office / Office européen des brevets

(11) **EP 3 311 459 B1**

(12) **EUROPEAN PATENT SPECIFICATION**

(45) Date of publication and mention of the grant of the patent:
**07.08.2019 Bulletin 2019/32**

(51) Int Cl.:
**H02J 3/01** (2006.01)

(21) Application number: **16730350.2**

(22) Date of filing: **15.06.2016**

(86) International application number:
**PCT/EP2016/063759**

(87) International publication number:
**WO 2016/202859 (22.12.2016 Gazette 2016/51)**

(54) **POWER INVERTER, CONTROL UNIT FOR POWER INVERTERS AND NETWORK OF POWER INVERTERS**

WECHSELRICHTER, STEUERUNGSEINHEIT FÜR WECHSELRICHTER UND NETZWERK VON WECHSELRICHTERN

ONDULEUR DE PUISSANCE, UNITÉ DE COMMANDE POUR ONDULEURS DE PUISSANCE ET RÉSEAU D'ONDULEURS DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2015 LU 92743**

(43) Date of publication of application:
**25.04.2018 Bulletin 2018/17**

(73) Proprietor: **Université de Luxembourg 1511 Luxembourg (LU)**

(72) Inventor: **HADJI-MINAGLOU, Jean-Régis 1359 Luxembourg (LU)**

(74) Representative: **Pronovem**
**Pronovem Luxembourg**
**12, avenue du Rock n' Roll**
**BP 327**
**4004 Esch sur Alzette (LU)**

(56) References cited:
**EP-A2- 2 065 994**

- **CALDOGNETTO TOMMASO ET AL: "Improving Microgrid Performance by Cooperative Control of Distributed Energy Sources", IEEE TRANSACTIONS ON INDUSTRY APPLICATIONS, IEEE SERVICE CENTER, PISCATAWAY, NJ, US, vol. 50, no. 6, November 2014 (2014-11), pages 3921-3930, XP011564535, ISSN: 0093-9994, DOI: 10.1109/TIA.2014.2313648 [retrieved on 2014-11-18]**
- **JINTAKOSONWIT P ET AL: "Implementation and performance of cooperative control of shunt active filters for harmonic damping throughout a power distribution system", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, 13 October 2002 (2002-10-13), pages 51-58vol.1, XP032143410, DOI: 10.1109/IAS.2002.1044066 ISBN: 978-0-7803-7420-1**
- **KENNEDY K ET AL: "Development of a Network-Wide Harmonic Control Scheme Using an Active Filter", IEEE TRANSACTIONS ON POWER DELIVERY, IEEE SERVICE CENTER, NEW YORK, NY, US, vol. 10, no. 3, July 2007 (2007-07), pages 1847-1856, XP011186587, ISSN: 0885-8977**

**Description**

**Field of the Invention**

The invention generally relates to harmonics compensation in electrical systems, in particular, in electrical supply grids, such as, e.g. low or medium voltage power grids with distributed electrical power generation.

**Background of the Invention**

Harmonic distortion in an electrical supply grid results from the presence of non-linear electric loads. Simply stated, a linear electric load is a load, which does not draw a purely sinusoidal current of the same frequency as the sinusoidal supply voltage. Examples of non-linear loads are rectifiers, AC or DC motor drives, electric arc furnaces, etc. Traditional power supply grids that are supplied by large centralized high power plants present the loads a very low impedance. As a consequence, the voltages of the harmonics tend to have relatively small amplitudes.

Nowadays, non-linear loads as electrical consumers have become the rule rather than the exception. The sheer number of non-linear loads may cause significant harmonic distortion of the supply voltage. The effect is worsened by the fact that more and more small and medium-sized producers are connected to the grid, which thereby becomes more and more a power supply grid with distributed rather than centralised power generation. Such grids typically have a higher impedance, which makes them more responsive to harmonic distortion.

Various harmonic compensation techniques have been described.

EP 0965159 B1 discloses an active filter device suggesting the implementation of an active harmonics compensation of the load currents by injecting currents at 2 different frequencies varying with an offset from the harmonics frequencies to be compensated. A phase shift between line current and control voltage as well as the transfer function between the power module and the load are determined in order to generate the control signal at the frequency of the harmonic chosen to be compensated.

EP1079493 B1 describes a method for harmonics compensation in electric power networks based on an implementation of an active harmonic compensation by subtracting the rectified load voltage and current from the initial load AC voltage and currents.

EP2437383 A2 provides an active grid filter, suggesting the implementation of an active harmonic compensation for the application to the aircraft board electrical system based on the 3 to 2 phases Clarke transform of the measured current with the use of an adaptive low-pass filter to make the difference between reactive power and distortion power in order to compensate only the distortion power.

WO1997049168 A1 discloses power line harmonic reduction by hybrid parallel active/passive filter system with square wave inverter and dc bus control. An active/passive filter system is implemented to reduce the harmonics in the current of high power (> 1 MW) non-linear loads in stiff supply system supplied with a square wave inverter.

WO2011032287 A1 describes a distributed power generation interface performing a harmonics free power injection out of renewable energy sources into the power distribution grid by use of resonant controllers, a wide band feed-forward harmonic compensator, a notch filter as well as PI current and power controllers.

WO2002041463 A3 provides a system for correcting power factor and harmonics present on an electroduct in an active way and with high-dynamics, and suggests an implementation of a harmonic compensation based on Fast Fourier Transform (FFT) and an inverse FFT.

DE 10032447 A1 suggests an electric current harmonic compensation method using a software program for analysing the network input current, with determination of selected harmonic components, for corresponding control of compensation regulators, providing additional voltages used with the voltage values for the network vector regulation, for providing an ideal voltage characteristic.

DE 19819869 A1 discloses filtering out a basic oscillation from load currents in a first and a second cascade filter, and then filtering harmonics of any arbitrary order as discrete harmonics. The values produced are used for controlling an active harmonics filter, to generate a compensation current. The output values are combined to form a spatial vector, and three nominal currents for a pulsed current converter are formed by means of an inverse Clarke transformation.

US 5648894 describes a system for compensation of harmonic distortion and neutral unbalance in a four-wire three phase power distribution system. To eliminate the respective harmonic components from the lines of the distribution system, an active power filter is provided. It includes a PWM inverter that provides compensating currents to the lines, respectively. Each compensating current equals the harmonic current components in its corresponding line, leaving only the fundamental component.

A. Prasad, P. Zogias, S. Manias: "An Active Power Factor Compensation Correction Technique for Three-Phase Diode Rectifiers", IEEE Transactions on Power Electronics, Vol. 6 No. 1, January 1991 presents a power factor compensation at the output of a single AC-DC power converter reducing the need of reactive power at the input, considering the feedback effect of that nonlinear load on the power source individually and not globally as a sum of multiple non-linear sinks.

F. Wang, M Benhabib, J. Duarte, M. Hendrix: "High Performance Stationary Frame Filters for Symmetrical Sequences or Harmonics Separation under a Variety of Grid Conditions", 978-1-422-2812-0/09, IEEE proposes a positive-negative sequence filter cell to extract specific harmonics by damping the others. This methodology is very sensitive to large grid frequency variations and requires an additional low-pass filter, which increases the response time.

L. Moran, J. Dixon, R. Wallace: "A Three-phase Active Power Filter Operating with Fixed Switching Frequency for Reactive Power and Current Harmonic Compensation", IEEE Transactions on Industrial Electronics, Vol. 42, No. 4, August 1995 proposes a current harmonics and reactive power compensator for a local non-linear load taking into consideration neither the voltage quality of the AC main nor the general case of an arbitrary distribution of non-linear loads over the whole grid.

D. Yazdani, A. Bakhshai, P. Jain: "A Three-Phase Adaptive Notch Filter-Based Approach to Harmonic/Reactive Current Extraction and Harmonic Decomposition", IEEE Transactions on Power Electronics, Vol. 25, No. 4, January 2010 presents a notch filter, i.e. a band-stop filter that extracts with a high dynamic response any harmonics from a given signal, but needs two settings parameters to be optimised in function of the operating conditions for reaching the desired dynamic without oscillation.

A. Salamah, S. Finney, B. Williams: "Three-phase phase-lock loop for distorted utilities", IET Electrical Power Applications, 2007, 1, (6), pp. 937-945 utilises a weighted least-square method based PLL using a PI-controlled moving average that can become unstable in the case of a too narrow averaging window or to slow in the case of a too wide averaging window.

C. Marques, M. Ribeiro, C. Duque, P. Ribeiro, E. da Silva: "A Controlled Filtering Method for Estimating Harmonics of Off-Nominal Frequencies", IEEE Transactions on Smart Grid, Vol. 3, No. 1, March 2012 proposes to apply the FIR Filter to estimate accurately and robustly the off-nominal frequencies (time-varying fundamental frequency) and the relevant harmonics in islanded micro-grids supplying non-linear loads, but does not propose any solution to compensate them.

B. Ren, Y. Zhong, X. Sun, X. Tong "A Digital PLL Control Method Based on the FIR Filter for a Grid-Connected Single-Phase Power Conversion System", 978-1-4244-1706-3/08, IEEE proposes to apply a phase-shifted FIR filter to the voltage or current signal to determine a fictitious 2nd phase of a single-phase voltage source in order to be able to perform then a PLL.

EP2065994 A2 discloses a system and a method for compensating harmonic components or a reactive power of an electrical network. The system comprises a measurement unit configured to measure an electrical quantity to be compensated, a control unit configured to determine harmonics contents or a reactive power need of the measured electrical quantity to be compensated as well as to determine, as relative values, desired values corresponding with the harmonics to be compensated or the reactive power to be compensated, one or more compensation units configured, responsive to the desired values provided by the control unit, to generate harmonic components or a reactive current according to the desired values given as relative values, and a communications connection configured to communicate the desired values determined by the control unit to the compensation units.

Caldognetto Tommaso et al: "Improving Microgrid Performance by Cooperative Control Of Distributed Energy Sources", IEEE Transactions On Industry Applications, Vol. 50, No. 6, 1 November 2014 discloses an approach to control the distributed energy resources (DERs) in a low-voltage microgrid, to increase energy efficiency and hosting capacity of the microgrid itself, with only the requirement of narrow-band communication among distributed loads and generators.

**General Description**

A first aspect of the invention relates to a power inverter for converting one or more source currents into one or more alternating currents to be injected into an electrical supply grid. The power inverter according to the first aspect of the invention comprises a harmonics compensator configured to detect one or more harmonics of the fundamental frequency of the electrical supply grid and to control the one or more alternating currents to be injected into the electrical supply grid in such a way as to selectively modify the voltage of at least one of the one or more detected harmonics in accordance with one or more respective targets (e.g. setpoints or directions of modification such as "up" or "down"). The power inverter further comprises a communication interface, which allows it to join a network of power inverters. The harmonics compensator is connected to the communication interface and configured to share some or all of its operating parameters over the network and to adjust the one or more targets depending on instructions and/or operating parameters communicated to it via the network.

As used herein, the term "harmonic" designates an electric signal oscillating at a frequency that is an integer multiple (> 1) of the nominal (also: fundamental) frequency of the electrical supply grid. For convenience, each harmonic is designated herein by the ordinal corresponding to that integer multiple: with n being an integer greater than 1, the n-th harmonic has a frequency that is n times the frequency of the fundamental oscillation. In the present document, the fundamental oscillation is thus not considered as a harmonic.

The power inverter is preferably adapted for an m-phase electrical supply grid, where m is 1 or 3. The supply grid may have 0, 1 or plural neutral conductors.

The power inverter according to the first aspect of the invention allows harmonics compensation by a network of power inverters. It is one of the merits of the inventor to have recognized that harmonics compensation can be achieved in a more efficient way by a network of power inverters that exchange on their operating parameters.

Preferably, the operating parameters shared by the power inverter are indicative of the one or more targets applied by the harmonics compensator. The operating parameters shared by the power inverter comprise the electric powers delivered by the power inverter at each one of the one or more harmonics, respectively.

According to a preferred embodiment, the harmonics compensator comprises a plurality of harmonics control loops, each harmonics control loop being configured to control the voltage of a specific harmonic.

The one or more targets may be the setpoints of the harmonics control loops. Alternatively, the one or more targets could simply be directions of modification communicated to the power inverter, such as e.g. desired increase or a decrease in the voltage of one or more of the detected harmonics.

A power inverter according to the first aspect of the invention may comprise a filter for detecting at least one harmonic in an electric signal. The filter may comprise a dedicated harmonics filter path for each harmonic to be detected. Each dedicated harmonics filter path preferably comprises a harmonic filter, the harmonic filter adapted to the respective harmonic, a harmonic detector, the harmonic detector adapted to the respective harmonic frequency and a harmonic controller, the harmonic controller adapted to control the electric signal at the respective harmonic frequency.

A second aspect of the invention relates to a control unit for controlling a network of power inverters as generally described above. A control unit according to the second aspect of the invention comprises:

  ◦ a communication interface for communicating with the power inverters of the network and for receiving operating parameters of the power inverters shared by them over the network; and

  ◦ a processor connected to the communication interface, the processor being configured to evaluate an objective function using the received operating parameters, and to dispatch instructions to power inverters of the network to provoke variations of the objective function, the instructions causing the power inverters of the network to adjust the one or more targets in accordance with which they modify the voltage of at least one of the one or more harmonics they detect.

The processor could be a general-purpose microprocessor or microcontroller, an application-specific integrated circuit (ASIC), a programmable logic device (PLD), a field-programmable gate array (FPGA), or the like.

As will be appreciated, the objective function is a function, which maps the received operating parameters on a value that reflects a quality of the harmonics compensation. If the value has a negative connotation, one typically speaks of a cost function or a loss function (which are typically to be minimized). If the value has a positive connotation, the terms reward function or profit function (which are typically to be maximized) are used.

The processor is preferably configured to generate the instructions in accordance with an optimisation algorithm concerning the objective function. If the objective function is a cost or loss function, the optimisation algorithm aims at minimising the value of the objective function. If the objective function is a reward or profit function, the optimisation algorithm aims at maximising the value of the objective function.

The targets of the power inverters of the network may be considered to define an operational state of the network. The network follows a path through different operational states under the control of the control unit, which decides, in each operational state, how the targets of the power inverters are varied and which will thus be the next operational state. The optimisation algorithm may e.g. be a steepest-descent or steepest-ascent algorithm. According to a preferred variant, the processor is configured to dispatch candidate instructions in an iterative manner to detect a variation of the current operational state that implies an improvement in terms of the objective function and to update the current operational state when such a variation is detected. As the network has to react to changing power demand and harmonics distortion, it cannot generally be assumed that the objective function is known or can be predicted. Accordingly, testing candidate instructions may be an adequate way for the control unit to obtain information about the objective function in the neighbourhood of the current operational state at a specific time and to find the steepest gradient or at least a gradient reasonably close to the steepest gradient.

The processor is preferably configured to evaluate the objective function separately for each harmonic and to optimise the objective function for each harmonic. That implies that the control unit may optimise compensation of each harmonic individually.

According to the invention, the objective function reflects the total power delivered by the power inverters at each one of the one or more harmonics, respectively. Each power inverter is configured to transmit, as part of its operating parameters, the powers it delivers to the supply grid at each of the one or more harmonics, respectively. The control unit may then compute, for each harmonic, the total power as the sum of the individual powers received from the power inverters. The objective function is preferably the total apparent power at each harmonic.

The processor is preferably configured to generate the instructions in accordance with an optimisation algorithm minimizing the total power delivered by the power inverters at each one of the one or more harmonics, respectively.

The processor may be configured to maintain, for each harmonic, a schedule defining the order according to which the processor dispatches candidate instructions to the different power inverters of the network. Preferably, the processor is further configured to dynamically modify the schedule depending on the operating parameters shared by the power inverters. Dynamic scheduling enables the processor to adapt itself to changing circumstances, such as increased or reduced harmonic distortions, varying geographical distribution of the harmonic distortions, failure of a power inverter, a power inverter becoming available, etc.

The processor may be configured to maintain, for each harmonic, a ranking of the power inverters of the network that reflects the electric power delivered by the power inverters at that harmonic. The ranking may take the place of the schedule mentioned above. The processor is further preferably configured, for each harmonic, to dispatch candidate instructions more frequently to power inverters with a higher ranking than to power inverters with a lower ranking. Those skilled will appreciate that the power inverters typically contribute to different extents to the compensation of a particular harmonic. By dispatching candidate instructions more frequently to power inverters making a greater contribution in the compensation of a harmonic, the processor ascertains that the optimisation algorithm converges quickly towards a satisfactory compensation of the harmonics when the current operational state of the network is far from optimal.

A third aspect of the invention relates to a power inverter that comprises a control unit as described above. Preferably, the control unit of the power inverter is configured to be placed into a master mode, in which the processor evaluates the objective function and dispatches instructions to power inverters of the network, and into a slave mode, in which the processor does not dispatch instructions to power inverters of the network.

A fourth aspect of the invention relates to a network of power inverters, comprising a plurality of power inverters as described above and at least one control unit as described above. The at least one control unit may be integrated to at least one power inverter.

As will be appreciated, the invention in its various aspects allows achieving harmonics compensation in a more efficient way than it was possible before. In particular, the invention may be used to minimise the total apparent power needed in the network to actively compensate the harmonics. A total harmonic distortion (THD) smaller than 8% in any load case, as required in the European norm EN50160, may be achieved without difficulty. As used herein, THD is defined by the formula:

$$THD = \sqrt{\frac{\sum_n V_n^2}{V_F^2}}, \qquad \text{Eq. 1}$$

where the sum runs over all harmonics n, $V_n$ is the voltage amplitude of the n-th harmonic and $V_F$ is the voltage amplitude of the fundamental frequency.

**Brief Description of the Drawings**

The accompanying drawings illustrate several non-limiting aspects of the present invention and, together with the detailed description, serve to explain the principles thereof. In the drawings:

Fig. 1: is a diagram illustrating grid voltage and current with and without harmonics compensation at a power transformer in overload.

Fig. 2: is a diagram illustrating grid voltage and current with and without harmonics compensation at a power transformer at rated power.

Fig. 3: is a diagram comparing the total harmonic distortion at no compensation and at cumulated harmonics compensation in overload and at rated power.

Fig. 4: is an equivalent circuit diagram of a power network with two inverter-based voltage sources.

Fig. 5: is an equivalent circuit diagram of a power network with a non-linear load an two inverter-based voltage sources.

Fig. 6: is a graph of the relative distribution of the apparent power between the voltage sources of Fig. 5 as a function of the resistances difference $R_j - R_i$ of the grid line sections j and i respectively.

Fig. 7: is an equivalent circuit diagram of a power network with three voltage source inverters and one non-linear load.

Fig. 8: is a graph illustrating different distributions of the compensation power among three VSIs that result when the VSI closest to the non-linear load runs at nominal power ($q_1 = 1$), at part power ($q_1 < 1$) and at overpower ($q_1 > 1$).

Fig. 9: is a schematic illustration of a power network with power inverters connected to form a communication network.

Fig. 10: Is an illustration of an example of possible distributions of the compensation powers among the power inverters of Fig. 9.

Fig. 11: is a graph illustrating the total compensation power as a function of the power coefficient of the VSI closest to the non-linear load when the power coefficients of the other VSIs are set to 1.

Fig. 12: is a simplified flow chart of an optimisation algorithm implemented by a control unit or a master power inverter together with the slave power inverters of its network.

Fig. 13: is an illustration of a convergence path of a simplified optimisation algorithm for a simulated network of power inverters.

Fig. 14: is an illustration of the decision process of the optimisation algorithm.

Fig. 15: is a comparison of convergence paths obtained for different optimisation methods where a new operation point is selected as soon as the global apparent power has become lower starting with the inverter i (left graph) or starting with the inverter j (right graph) and not after having tested all the possible operating points and selected the best one.

Fig. 16: is an illustration of convergence paths resulting when one of the power inverters involved is limited in the compensation power it can deliver to the grid and when the limitation ceases to exist.

Fig. 17: is a schematic block diagram of a power inverter capable of harmonics compensation according to the first aspect of the invention.

Fig. 18: is a schematic block diagram of a power inverter comprising a control unit according to the second aspect of the invention.

Fig. 19: is a more detailed block diagram of a power inverter configured and arranged for a 3-phase grid.

Fig. 20: is a more detailed block diagram of a power inverter configured and arranged for a single-phase grid.

Fig. 21: is a schematic block diagram of a power network with several power inverters organised in geographical clusters.

## Detailed Description of one or more Preferred Embodiments

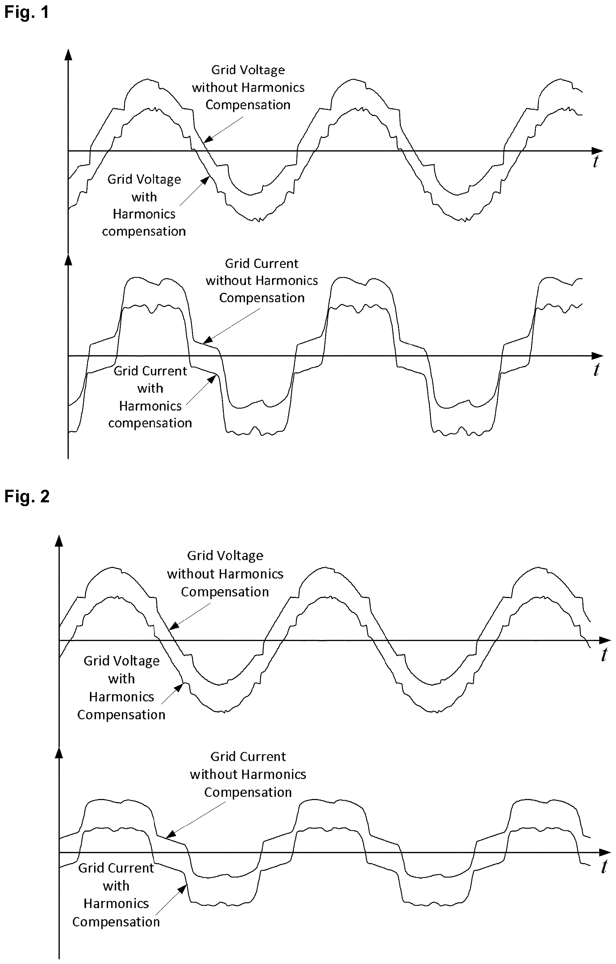

Fig. 1 is a diagram illustrating grid voltage and current at a power transformer in overload. For sake of clarity, the voltages and currents with and without harmonics compensation are drawn offset from one another: the grid voltage and current without harmonics compensation are drawn shifted upwards, whereas the grid voltage and current with harmonics compensation are shown shifted downwards.

Fig. 2 illustrates grid voltage and current with and without harmonics compensation at a power transformer at rated power. The grid voltage and current without harmonics compensation is drawn shifted upwards, whereas the grid voltage and current with harmonics compensation is shown shifted downwards.

Figs. 1 and 2 show the differences in the shapes of the voltage and the current vs. time at the phases of an power transformer in overload and at rated power with and without harmonics compensation when the power supply feeds in a non-linear load like TV or ICT servers. With harmonics compensation on, the shape of the voltage tends to a pure sinusoid at any load case. The feedback effect of the non-linear load on the output voltage of the transformer depends on the rated power of the transformer: The lower the rated power, the higher is the feedback effect.

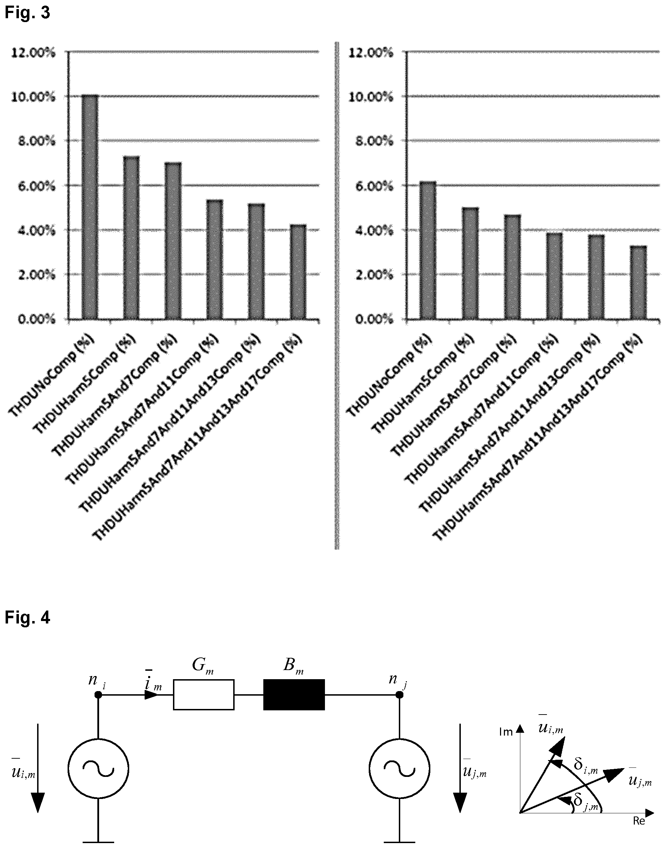

The left-hand chart of Fig. 3 compares the THD without compensation (leftmost bar) with the THDs obtained with compensation turned on for specific harmonics in overload. The right-hand chart shows the same at rated power. Fig. 3 shows that it is possible to achieve THD < 8%, as required in the European norm EN50160, if the lower harmonics are appropriately compensated. Thanks to the invention, that can now be done in a more efficient way.

In a symmetrical non-linear load connected to the AC grid, the instantaneous power in one phase is given by Eq. 2:

$$p(\omega_1 t) = \sum_{k=m=1}^{\infty} U_m I_k \cos(\varphi_m - \varphi_k)$$
$$+ \sum_{m=1}^{\infty}\sum_{k=1}^{\infty} U_m I_k \cos\left[(m+k)\omega_1 t + (\varphi_m + \varphi_k)\right] \qquad \text{Eq. 2}$$
$$+ \sum_{\substack{m=1\\m\neq k}}^{\infty}\sum_{k=1}^{\infty} U_m I_k \cos\left[(m-k)\omega_1 t + (\varphi_m - \varphi_k)\right]$$

where:

◦ $\omega_1$ is the actual fundamental frequency of the grid (e.g. between 49.5 Hz and 50.5 Hz in accordance with quality standard EN50160 for 50-Hz power grids;
◦ m (resp. k) = 1,3,5,..., $\infty$ is the harmonic order of the voltage or the current (for sake of simplicity, the fundamental wave is numbered 1).

The terms

$$\sum_{k=m=3}^{\infty} U_m I_k \cos(\varphi_m - \varphi_k) + \sum_{m=1}^{\infty}\sum_{k=1}^{\infty} U_m I_k \cos\left[(m+k)\omega_1 t + (\varphi_m + \varphi_k)\right]$$
$$+ \sum_{\substack{m=1\\m\neq k}}^{\infty}\sum_{k=1}^{\infty} U_m I_k \cos\left[(m-k)\omega_1 t + (\varphi_m - \varphi_k)\right]$$

represent the distortion power due to the harmonics. The distortion power can be reduced by reducing the harmonics voltage magnitudes $U_m$ for m = 3,5,..., $\infty$ individually. The distortion power can be compensated by one inverter alone or several inverters distributed along the grid line.

Fig. 4 shows two inverter-based voltage sources connected to the grid, generating at the nodes $n_i$ and $n_j$ the complex voltages $\bar{u}_{i,m}$ and $\bar{u}_{j,m}$ with phase shifts $\delta_{i,m}$ and $\delta_{j,m}$, respectively (see vector diagram on the right) for the compensation of harmonic m. Complex values are denoted by macrons (diacritical bars placed above the respective letters). The grid line on this section has a conductance $G_m$ and a susceptance $B_m$ for the harmonic m. The current $\bar{i}_m$ related to harmonic m flowing in the line section from node $n_i$ to node $n_j$ is given by:

$$\bar{i}_m = (G_m + jB_m)\cdot(\bar{u}_{i,m} - \bar{u}_{j,m}) = (G_m + jB_m)\cdot(U_{i,m}e^{j(m\omega_1 t + \delta_{i,m})} - U_{j,m}e^{j(m\omega_1 t + \delta_{j,m})})$$
$$= (G_m + jB_m)\cdot\left(U_{i,m} - U_{j,m}e^{j(m\omega_1 t + \delta_{j,m} - \delta_{i,m})}\right)\cdot e^{j(m\omega_1 t + \delta_i)}$$
$$= \left(\begin{array}{l} G_m\left(U_{i,m} - U_{j,m}\cos(\delta_{i,m} - \delta_{j,m})\right) - B_m U_{j,m}\sin(\delta_{i,m} - \delta_{j,m}) \\ + j\left(B_m\left(U_{i,m} - U_{j,m}\cos(\delta_{i,m} - \delta_{j,m})\right) + G_m U_{j,m}\sin(\delta_{i,m} - \delta_{j,m})\right) \end{array}\right)\cdot e^{j(m\omega_1 t + \delta_i)}$$

The complex power $\bar{s}_m$ for the harmonic m at node $n_i$ is thus

$$\bar{s}_m = \bar{u}_{i,m} \cdot \bar{i}_m^*$$

$$= U_{i,m} e^{j(m\omega_1 t + \delta_{i,m})}$$

$$\cdot \left( \begin{array}{c} G_m \left( U_{i,m} - U_{j,m} \cos\left(\delta_{i,m} - \delta_{j,m}\right) \right) - B_m U_{j,m} \sin\left(\delta_{i,m} - \delta_{j,m}\right) \\ + j \left( B_m \left( U_{i,m} - U_{j,m} \cos\left(\delta_{i,m} - \delta_{j,m}\right) \right) + G_m U_{j,m} \sin\left(\delta_{i,m} - \delta_{j,m}\right) \right) \end{array} \right) \cdot e^{-j(m\omega_1 t + \delta_i)}$$

$$= G_m \left( U_{i,m}^2 - U_{i,m} U_{j,m} \cos\left(\delta_{i,m} - \delta_{j,m}\right) \right) - B_m U_{i,m} U_{j,m} \sin\left(\delta_{i,m} - \delta_{j,m}\right)$$

$$- j \left( B_m \left( U_{i,m}^2 - U_{i,m} U_{j,m} \cos\left(\delta_{i,m} - \delta_{j,m}\right) \right) + G_m U_{i,m} U_{j,m} \sin\left(\delta_{i,m} - \delta_{j,m}\right) \right)$$

which may be rewritten as:

$$\bar{s}_m = \begin{bmatrix} G_m & B_m \\ -B_m & G_m \end{bmatrix} \cdot \begin{bmatrix} U_{i,m}^2 - U_{i,m} U_{j,m} \cos\left(\delta_{i,m} - \delta_{j,m}\right) \\ -U_{i,m} U_{j,m} \sin\left(\delta_{i,m} - \delta_{j,m}\right) \end{bmatrix} \cdot$$

Because of the relative low impedance of the grid line and when the voltage sources share the compensation power equally, in steady-state operation, the voltage magnitudes $U_{i,m}$ and $U_{j,m}$ are close to each other, i.e. $U_{i,m} \approx U_{j,m}$ and the phase shifts difference is close to 0, i.e. $\delta_{i,m} \approx \delta_{j,m}$, and thus $\sin(\delta_{i,m} - \delta_{j,m}) \approx \delta_{i,m} - \delta_{j,m}$ and $cos(\delta_{i,m} - \delta_{j,m}) \approx 1$. With this assumption, the complex power of the harmonic m can be approximated by:

$$\bar{s}_m = U_{i,m}^2 \begin{bmatrix} G_m & B_m \\ -B_m & G_m \end{bmatrix} \cdot \begin{bmatrix} 1 - \dfrac{U_{j,m}}{U_{i,m}} \\ -\delta_{i,m} + \delta_{j,m} \end{bmatrix}$$

The complex power of the harmonic m is thus defined by the differences of the voltage magnitudes and of the voltage phase shifts of the voltage sources. The complex power of the harmonic m is zero when the voltage magnitudes and phase shifts of both voltage sources are equal.

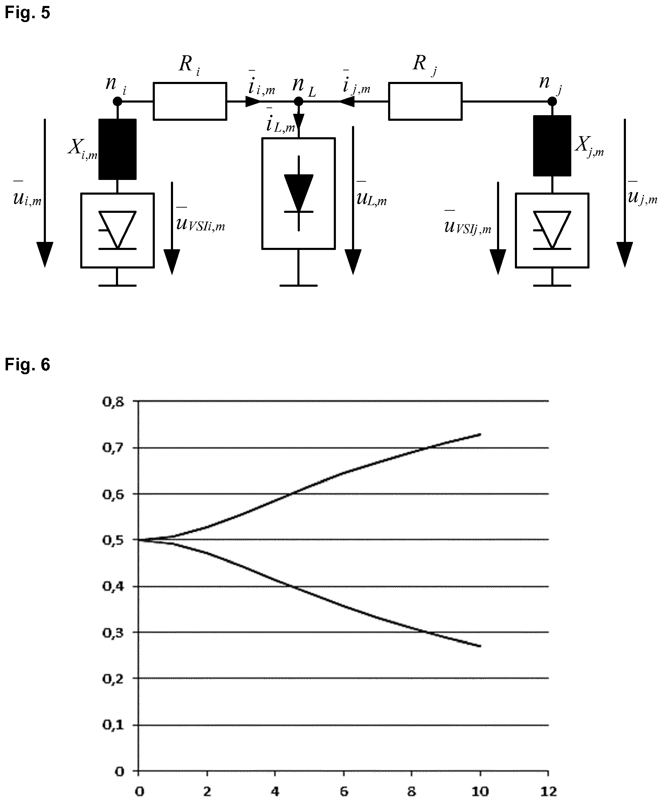

Fig. 5 shows the equivalent circuit of two voltage source inverters VSI$_i$ and VSI$_j$ connected to a non-linear load (i.e. a source of harmonic distortions) over the line of a resistive low-voltage grid. The grid line section between VSI$_i$ (resp. VSI$_j$) and the load has the resistance $R_i$ (resp. $R_j$). $X_{i,m}$ (resp. $X_{j,m}$) represents the impedance of the passive filter at the output of VSI$_i$ (resp. VSI$_j$). VSI$_i$ and VSI$_j$ generate voltages $\bar{u}_{VSI,m}$ and $\bar{u}_{VSIj,m}$, respectively, in order to reduce the load voltage $\bar{u}_{L,m}$ of harmonic m to 0 (like a short circuit) and thus to compensate the distortion power of harmonic m. The voltages and the currents of the VSI's fulfil:

$$\bar{i}_{i,m} + \bar{i}_{j,m} = \bar{i}_{L,m} \, ,$$

$$\bar{u}_{VSIi,m} = \left( R_i + jX_{i,m} \right) \cdot \bar{i}_{i,m} \, ,$$

$$\bar{u}_{VSIj,m} = \left( R_j + jX_{j,m} \right) \cdot \bar{i}_{j,m}$$

and

$$\bar{u}_{VSIi,m} = \bar{u}_{VSIj,m} \, .$$

In the case of short distances from the VSI's to the load the line resistances $R_i$ and $R_j$ are negligible ($R_i = R_j \approx 0$). The voltages and currents of both VSI's are thus equal and the compensation power is equally distributed between both VSI's.

For a longer distance from a VSI to the non-linear load, the corresponding line resistance is no longer negligible. The compensation power is no longer distributed equally between the VSIs. Fig. 6 shows the relative distribution of the apparent power (the magnitude of the complex power) between $VSI_i$ and $VSI_j$ of Fig. 5 as a function of the difference $R_j$ - $R_i$ (increasing from left to right).

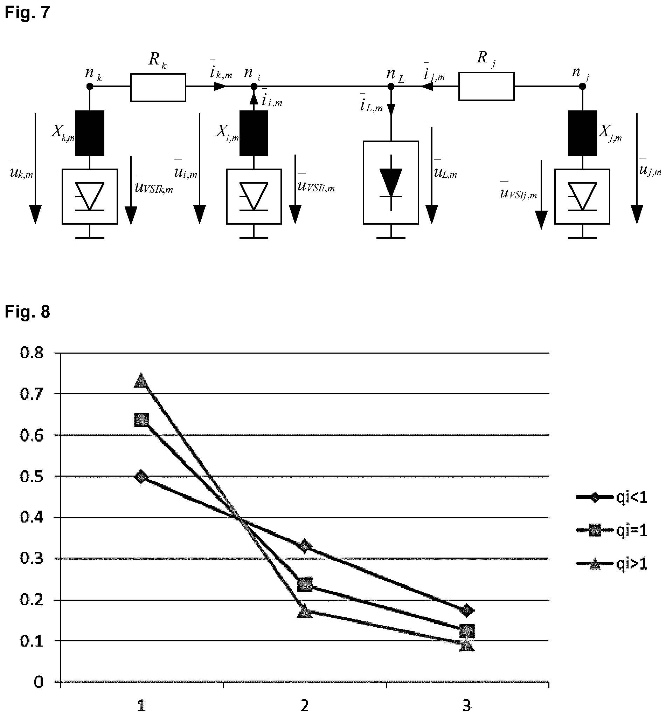

Fig. 7 shows the equivalent circuit of three voltage source inverters $VSI_i$, $VSI_j$ and $VSI_k$ connected to a non-linear load over the line of a resistive low-voltage grid. $VSI_i$ is close to the load and it is assumed that the impedance of the grid line section between $VSI_i$ and the load is negligible ($R_i \approx 0$). $VSI_j$ is more distant from the load than $VSI_i$ and $VSI_k$ is more distant from the load than $VSI_j$ ($R_k > R_j$).

The voltages and the currents of the VSIs fulfil:

$$\bar{i}_{i,m} + \bar{i}_{j,m} + \bar{i}_{k,m} = i_{L,m} ,$$

$$\bar{u}_{VSIi,m} = jX_{i,m} \cdot \bar{i}_{i,m} ,$$

$$\bar{u}_{VSIj,m} = \left(R_j + jX_{j,m}\right) \cdot \bar{i}_{j,m} ,$$

$$\bar{u}_{VSIk,m} = \left(R_k + jX_{k,m}\right) \cdot \bar{i}_{k,m} ,$$

$$\bar{u}_{VSIi,m} = q_{i,m} \cdot \bar{u}_{VSIj,m}$$

and

$$\bar{u}_{VSIj,m} = q_{j,m} \cdot \bar{u}_{VSIk,m} ,$$

where $q_{i,m}$ is a power coefficient predefining the compensation power ratio that $VSI_i$ can actually generate for the harmonic m (index i = 1,2,..., $\infty$ denotes the number of the VSI and index m= 3,5,..., $\infty$ the harmonic order). $q_{i,m}$ = 1 means that $VSI_i$ runs at nominal power for harmonic m, $q_{i,m}$ < 1 means that $VSI_i$ runs at partial power for harmonic m and $q_{i,m}$ >1 means that $VSI_i$ runs at overpower for harmonic m.

When all VSIs run at their nominal power ($q_{i,m}$ =1 for i = 1,2,..., $\infty$), each VSI contributes its natural share to the compensation power needed for the compensation of harmonic m. The VSI closest to the non-linear load generates more compensation power than the more distant VSI. When a VSI does not have enough power to generate its nominal compensation power at harmonic m ($q_{i,m}$ <1), the missing compensation power is naturally distributed between the other VSIs depending on their distance from the non-linear load. In overpower mode ($q_{i,m}$ >1), a VSI generates more compensation power than its necessary nominal compensation power. As a consequence, the other VSI have to bear only a reduced share of the required compensation power.

Fig. 8 shows the distributions of the compensation power among three VSIs that result when the VSI closest to the non-linear load ($VSI_1$) runs at nominal power ( $q_1$ = 1), at part power ($q_1$ < 1) and at overpower ($q_1$ > 1). In each case, the other VSIs react by providing more or less than their natural share of the compensation power.

It shall be noted that for a given VSI the power coefficient $q_{i,m}$ may take different values for the different harmonics. Accordingly, the distribution of the compensation power among the VSIs may be different for each harmonic.

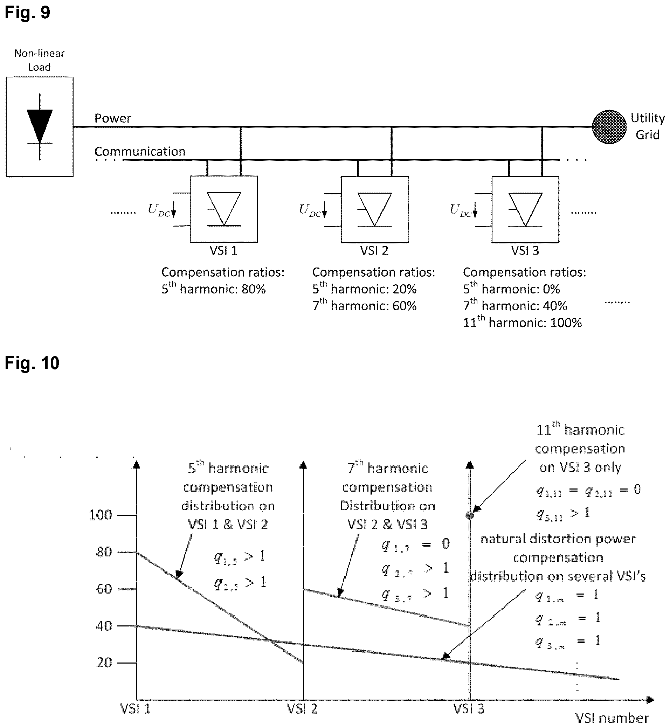

It is the inventor's merit to have recognized that the distribution of the compensation power among power inverters (e.g. VSIs) connected to the grid can be actively controlled to reduce the total compensation power needed for the compensation of harmonics. The top part of Fig. 9 shows a power grid with a non-linear load and several VSIs ($VSI_1$, $VSI_2$, $VSI_3$, ...) connected to the grid line at different distances from the non-linear load. Absent any active control of the compensation power provided by each VSI, the overall compensation power is naturally distributed between the VSIs depending on their respective distance from the non-linear load and power capacity ($q_{i,m}$ <1, $q_{i,m}$ =1 or $q_{i,m}$ >1). The sum of the individual compensation powers equals the total distortion power to be compensated (assuming that the overall power capacity is sufficient for the compensation).

As shown in Fig. 9, the VSIs are connected to form a communication network allowing the VSIs to communicate with one another and/or with a control unit (not shown). The control unit may be part of a VSI, in which case that VSI may be termed the master VSI and the other VSIs the slave VSIs. Under the control of the control unit, the required compensation power can be arbitrarily distributed between the VSIs taking only their current power capacity into con-

siderationon for efficiency optimisation purpose. A criterion for adjusting the different compensation powers may be the reduction of the overall power losses due to the line resistance over the whole grid. Minimising the power losses may be achieved by increasing the compensation power generated by the VSI closest to the non-linear load, if that VSI has the required power capacities. The more distant VSIs are involved to a lesser extent in the compensation (than they would be in the case of a natural distribution of the compensation power) or not at all.

Controlling the VSI may be subordinate to several priorities and/or requirements. One requirement/priority may be that the harmonics compensation by the VSIs gives precedence to the harmonics with the highest voltage amplitudes (typically the low-order harmonics). A further requirement may be that the THD remains below a threshold, e.g. 8% as required by quality standard EN50160.

Fig 10 illustrates an example of possible distributions of the compensation powers among the VSIs of Fig. 9, for different harmonics. $VSI_1$ compensates only 80% of the 5th harmonic. The remaining 20% are taken over by $VSI_2$. As $q_{1,5} > 1$ and $q_{2,5} > 1$ (overpower of $VSI_1$ and $VSI_2$), no other VSI is involved in the compensation of the 5th harmonic. $VSI_2$ also compensates 60% of the 7th harmonic. The remaining 40% of the 7th harmonic are compensated by $VSI_3$. $VSI_1$ is not involved in the compensation of the 7th harmonic because of $q_{1,7} = 0$ (zero power for the compensation of the 7th harmonic by $VSI_1$, e.g. because of limitation of the available power). $VSI_3$ is in overpower on the 11th harmonic ($q_{3,11} > 1$). In the Example, it compensates 100% of the 11th harmonic. The other VSIs spend no compensation power on the 11th harmonic ($q_{1,11} = q_{2,11} = 0$). When no other harmonic is present on the grid, the compensation by other VSIs possibly connected to the grid can be put into stand-by. When higher order harmonics are present, the VSIs may be actively controlled by the control unit or they may compensate those harmonics autonomously (i.e. without relying on information on the operating parameters of the other VSIs or on instructions provided by the control unit, for instance in case of a communication failure between the master and the slaves).

With regard to power losses and voltage drops over the grid lines, it is advantageous if the VSI closest to the non-linear load provides a higher-than-natural compensation power while the more distant VSIs provide lower-than-natural compensation powers. The distribution of the compensation powers is ideally such that the total compensation power perfectly matches the distortion power to be compensated.

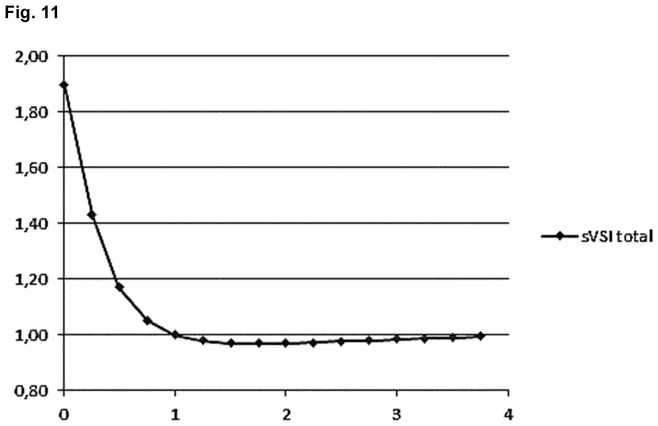

Fig. 11 shows the total compensation power (i.e. the sum of all compensation powers produced by the VSIs) as a function of $q_{i,m}$ (the power coefficient of the VSI closest to the non-linear load) when the power coefficients of the other VSIs are set to 1 ($q_{j,m} = 1$). As can be seen, the total compensation power is not necessarily minimized for $q_{i,m} = q_{j,m} = 1$.

An operating point of the network of VSIs is defined by the vector $[q_{1,m}; q_{2,m}; q_{3,m}; ...]$ for the harmonic m. The optimal operating point depends on several factors, such as the topology of the grid, the distribution of the VSIs on the grid, the sources of harmonic distortions and their locations, the magnitudes of the harmonic distortions, etc. As some of those factors may be partly unknown to the control unit and vary over time in a not completely predictable manner, it may not be possible for the control unit to foresee the optimal operating point. Accordingly, the control unit preferably implements a dynamic optimisation algorithm, which takes into account how the grid reacts to (small) changes of the operating point.

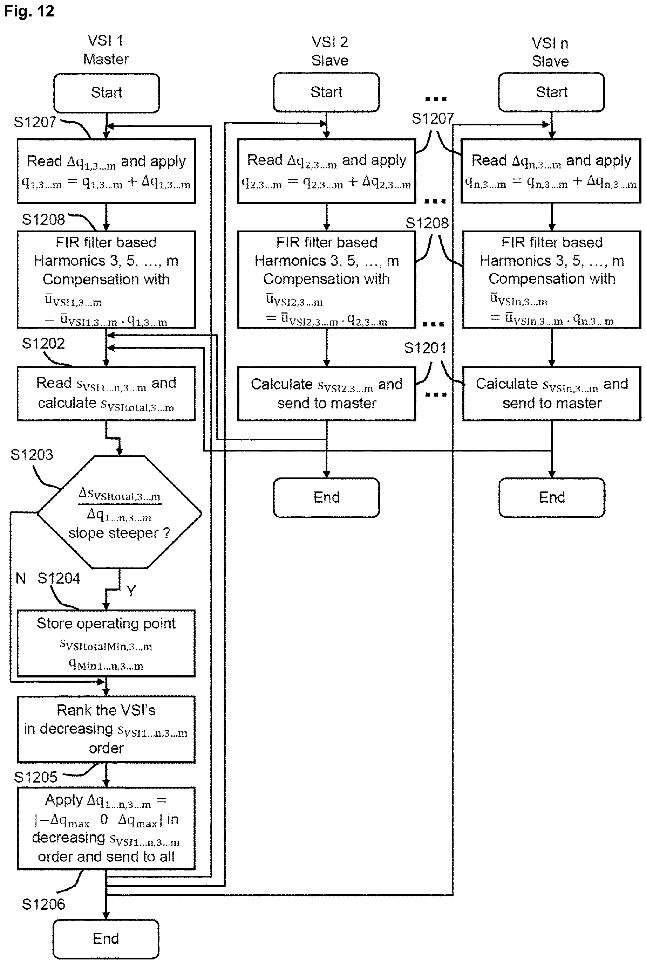

An example of an optimisation algorithm is shown in Fig. 12. In the example, $VSI_1$ is supposed to be the master VSI, whereas the other VSIs are slave VSIs. The master VSI comprises a control unit with (a) a communication interface for communicating with the other VSIs of the network and for receiving the operating parameters they share over the network and (b) a processor configured to evaluate a cost function using the received operating parameters as inputs, and to dispatch instructions to the VSIs to provoke variations of the cost function.

In the illustrated example, each $VSI_j$ (with j=1,...,n) shares, as its operating parameters, the complex compensation powers $\overline{s}_{VSIj,m}$ which it injects into the grid for the different harmonics m. Each $VSI_j$ derives the complex compensation powers $\overline{s}_{VSIj,m}$ (with magnitudes $s_{VSIj,m}$) from the corresponding complex currents and voltages (step S1201). Instead of transmitting the complex powers, the VSIs could transmit the corresponding current and voltage values.

The (control unit of the) master VSI computes (step S1202) the total compensation power $s_{SVItotal,m}$ for each harmonic m that it actively compensated as the sum of the individual compensation powers:

$$s_{SVItotal,m} = \sum_{j=1}^{n} s_{VSIj,m}.$$

For each harmonic m, the total apparent compensation power $s_{SVItotal,m}$ defines the cost function, which the control unit tries to reduce by adjusting the individual power coefficients $q_{j,m}$ of the VSIs.

In the illustrated example, the control unit implements a steepest descent algorithm (steps S1203, S1204, S1205), by testing which small variation $\Delta\vec{q} = [\Delta q_{1,m}; \Delta q_{2,m}; \Delta q_{3,m}; ...]$ of the current operating point $\vec{q} = [q_{1,m}; q_{2,m}; q_{3,m}; ...]$ entails the greatest reduction of the cost function. When the best candidate variation has been identified, the new operating point becomes $\vec{q}(new) = \vec{q}(old) + \Delta\vec{q}$ and the algorithm is carried out anew.

The control unit dispatches instructions to the VSIs of the network, which causes them to adjust the targets in accordance with which they modify the voltage of each harmonic m they detect. In each iteration of the algorithm, the control unit transmits the variations $\Delta q_{j,m}$ of the power coefficients that have to be applied by the VSIs that are addressed (step 1206). Specifically, each VSI$_j$ listens to the messages from the master VSI (or the standalone control unit) and reads the value $\Delta q_{j,m}$ that is intended for it (step 1207). It is worthwhile noting that, at a given time, the variation $\Delta q_{j,m}$ may be zero for many VSIs. In this case, the control unit does not need to address those VSIs at that time.

Upon receipt of an instruction to apply $\Delta q_{j,m}$, the VSI$_j$ addressed applies a setpoint variation of the voltage of harmonic m (step S1208):

$$u_{qSetpOrdm}(new) = u_{qSetpOrdm}(old) + \Delta u_{qSetpOrdn}$$

where

$$\Delta u_{qSetpOrdm} = \Delta q_{j,m} \cdot u_{VSIj,m},$$

$u_{VSIj,m}$ being the voltage that VSI$_j$ had to apply to steer the voltage of harmonic m to $u_{qSetpOrdn}$.

As the change of the setpoint in a single VSI may result in a different distribution of the compensation power over the entire network, all VSIs communicate their individual compensation powers to the control unit (S1201) after each application of a change of the operating point.

The algorithm could be started from any initial operating point $\vec{q}$. Preferably, however, it is started at $\vec{q}$ = [1,1,1,...], meaning that each VSI tries to drive the amplitudes of the harmonics voltages to 0 ($u_{qSetpOrdn}$ = 0 for each VSI). If a VSI is added to the network or if a VSI becomes operational again after an interruption, it also preferably starts with $u_{qSetpOrdn}$ = 0.

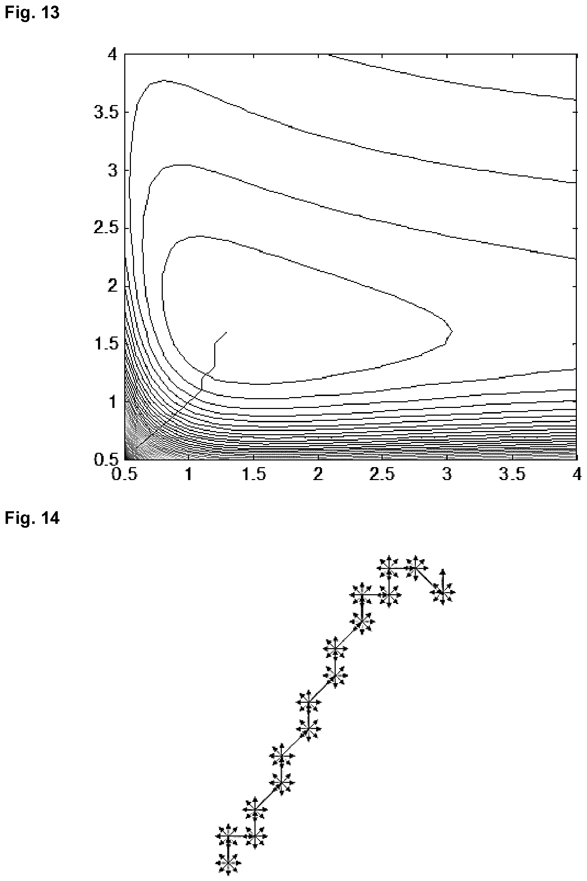

Fig. 13 shows the convergence path of a simplified optimisation algorithm for a simulated network of VSIs. Only two VSIs have been actively controlled by the control unit, the other ones were left running at their nominal compensation power. The reason for this simplification is that the path becomes three-dimensional with three centrally controlled VSIs, four-dimensional with four centrally controlled VSIs, etc., making it difficult to visualise such a path. Fig. 13 shows the isolines of the cost function. In the illustrated case, the cost function was known globally (i.e. for all theoretically possible operating points), since all relevant parameters were entered into the simulation. In a real situation, the cost function is not globally known and, furthermore, may change over time. Fig. 13 shows that the operating point of the network roughly follows the steepest descent to the minimum of the cost function (around [$q_{1,m}$; $q_{2,m}$] = [1.5; 1.5])

Fig. 14 illustrates that, at each operating point, the algorithm tests different candidate variations $\vec{\Delta q}$ = [$\Delta q_{1,m}$; $\Delta q_{2,m}$], among which it selects the one that results in the steepest descending slope (see also step 1203 in Fig. 12). The slope is calculated as:

$$slope(\vec{q}) = \frac{\Delta|\bar{s}_{VSItotal,m}|}{|\Delta\vec{q}|} = \frac{|\bar{s}_{VSItotal,m}(\vec{q}+\vec{\Delta q})| - |\bar{s}_{VSItotal,m}(\vec{q})|}{|\Delta\vec{q}|}.$$

In the example, it is assumed that $\Delta q_{i,m}$ (i = 1 or 2) may take three values: - $\Delta q_{max}$, 0 and $\Delta q_{max}$, where $\Delta q_{max}$ is the maximum allowed step size (e.g. between 1% and 20%, preferably between 5% and 10%). In this case, the value of $\Delta q_{max}$ is kept constant. In more elaborate versions of the algorithm, $\Delta q_{max}$ may be able to vary over time and/or may take different values for different VSIs. For each operating point, that makes eight candidate variations ($\vec{\Delta q}$ = [0; 0] is no variation) that the control unit tests one by one. To this end, the control unit sends the corresponding candidate instructions to the VSIs of the network and reads the returned compensation powers. The first slope resulting from the first candidate variation applied at a given operating point, the candidate operating point and the obtained total compensating power are stored in respective memories (alternatively, this is done only if the obtained slope is negative). The control unit then instructs the VSIs to apply the second candidate variation $\vec{\Delta q}$ and compares the obtained slope of the cost function with the first slope. If the new slope is a steeper descent than the previously stored slope (tested at step S1203 in Fig. 12) the new slope, the new operating point and the new total compensation power take the place of the previously stored values. These steps are carried out analogously for all candidate variations. When the algorithm has cycled across all allowed variations, the surviving candidate operating point is the one implying the steepest descent.

Before testing the candidate instructions at an operating point, the control unit determines a ranking of the VSIs in accordance with the apparent power they supply to the grid for the given harmonic m. The algorithm gives precedence to variations of the power coefficient of the VSI providing the highest compensation power, i.e. the closest to the non-linear loads, because that power coefficient has the greatest impact on the total compensation power in comparison to the power coefficients of the other VSIs.

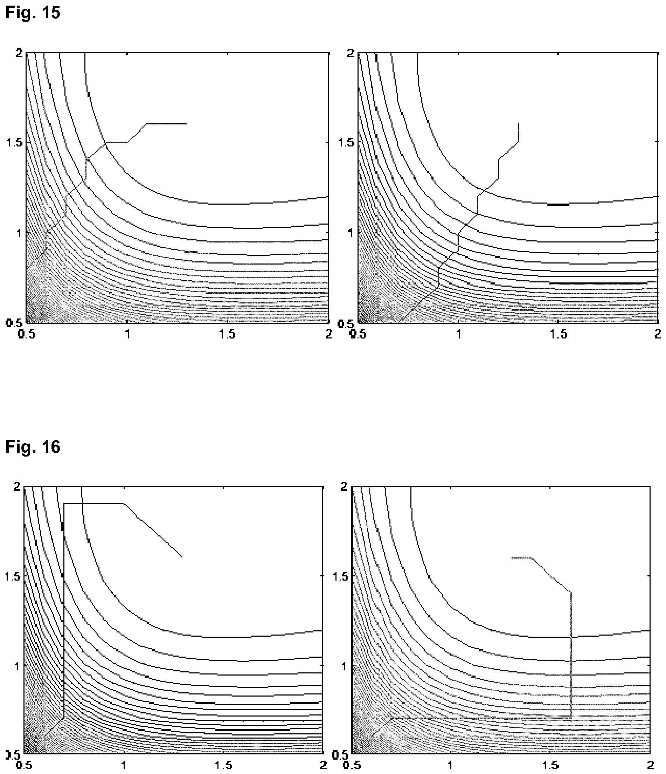

Fig. 15 illustrates a variant of the algorithm of Figs. 13 and 14, which differs from that algorithm described above in that a new operation point is selected as soon as a candidate operating point is found for which the global apparent power is lower, and not only after having tested all the available candidate operating. The algorithm converges on different paths if the optimisation algorithm gives a higher priority to the variation of the power coefficient of $VSI_i$, the VSI closest to the non-linear load (graph on the left), or to the power coefficient of $VSI_j$, the VSI more distant from the non-linear load (graph on the right). In that variant of the algorithm, the path thus depends on the order of testing the VSIs.

Fig. 16 illustrates what happens if one of the centrally controlled VSIs is not capable of providing the full compensation power: the optimisation algorithm routes the remaining VSI towards another operating point. When all VSIs are fully operational again, the algorithm converges to the optimal operating point. On the left graph of Fig. 16, $VSI_1$ is running at limited compensation power ($q_{1,m} < 80\%$), which causes the control unit to run $VSI_2$ with increasing $q_{2,m}$. When $VSI_1$ is no longer limited in compensation power, its power coefficient is increased by the control unit. At the same time, the power coefficient $q_{2,m}$ of $VSI_2$ is decreased, so that the algorithm converges towards the optimal operating point known from Figs. 13 and 15. The right graph of Fig. 16 shows the same scenario with the roles of $VSI_1$ and $VSI_2$ inverted.

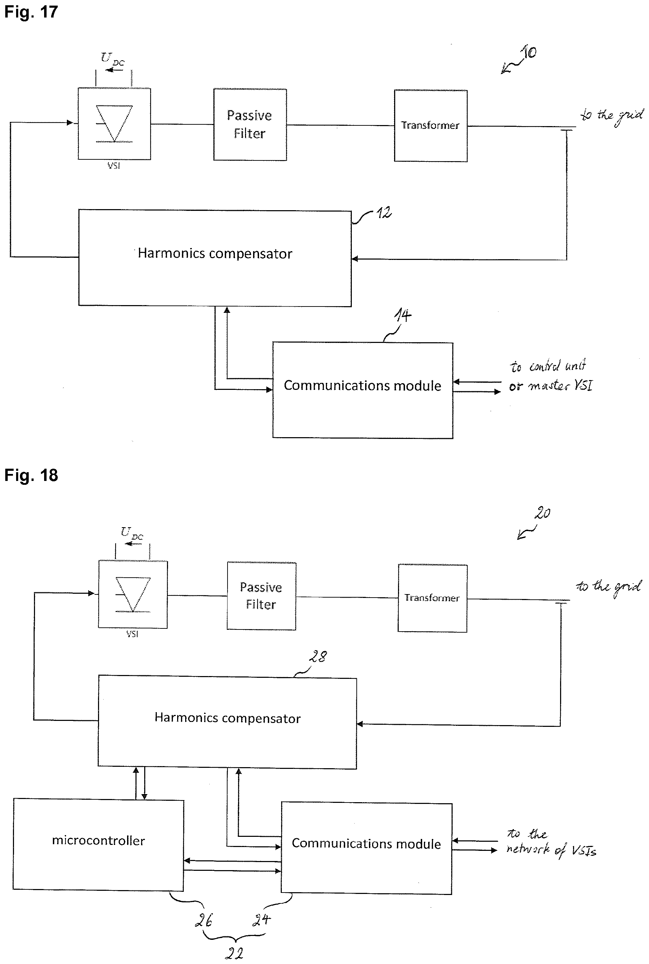

Fig. 17 schematically illustrates a possible embodiment of a (slave) VSI 10 for converting a DC source current into alternating current. The VSI 10 comprises a harmonics compensator 12 configured to detect one or more harmonics of the fundamental frequency of the electrical supply grid and to control the alternating current(s) to be injected into the electrical supply grid in such a way as to selectively drive the voltage amplitude of the harmonics towards respective setpoints. The VSI 10 further comprises a communications module 14, which allows the VSI 10 to join the network of VSIs. The harmonics compensator 12 is connected to the communications module to send the currently measured complex compensation power over the network and to adjust its setpoints for the different harmonics depending on instructions and communicated to it by a control unit.

Fig. 18 schematically shows a (master) VSI 20 with an integrated control unit 22 for controlling the network of VSIs. The control unit 22 is comprised of a communications module 24 and a microcontroller 26. The microcontroller 26 is connected to the communication interface and evaluates a cost or profit function using the operating parameters received from the slave VSIs. The microcontroller 26 further dispatches the instructions to the slave VSIs, which causes them to adjust their power coefficients and thereby provoke variations of the cost or profit function.

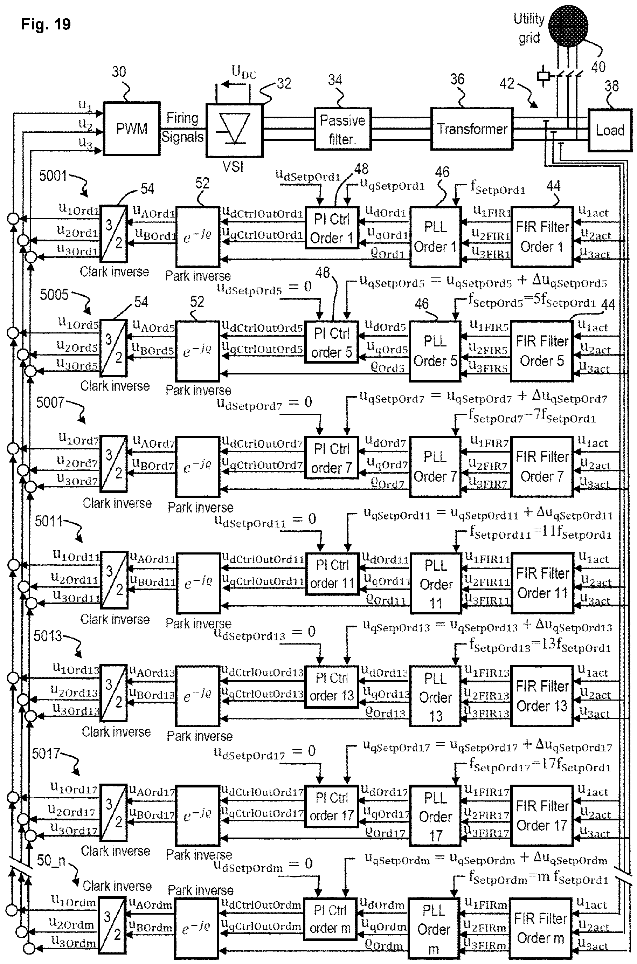

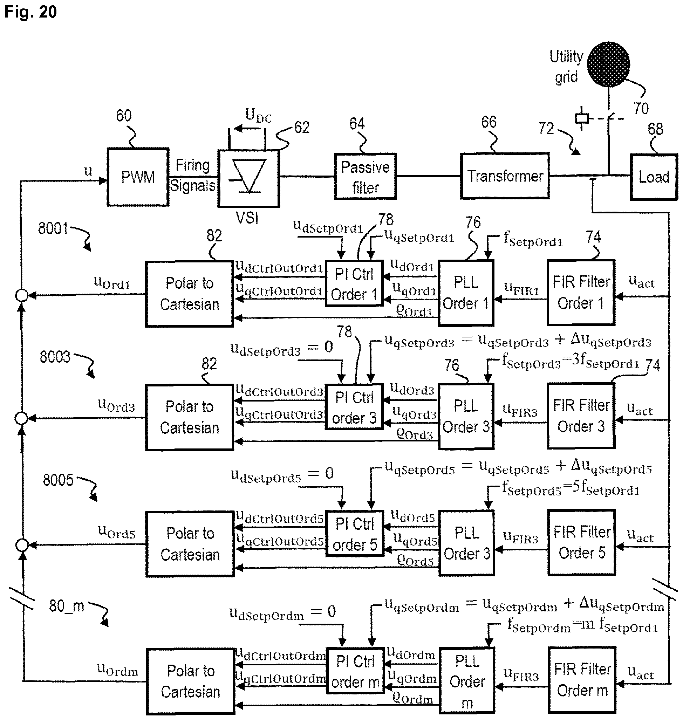

Figs. 19 and 20 show the structures of preferred embodiments of the harmonics compensators 12 (Fig. 17) and 28 (Fig. 18) in more detail. Fig. 19 shows a VSI adapted for a 3-phase grid whereas Fig. 20 shows a VSI adapted for a single-phase grid.

The harmonics compensators of Figs. 19 and 20 use finite impulse response (FIR) filters to separate the fundamental oscillation and the individual harmonics. It should be noted, however, that other filter types could be used as well. Each harmonic is compensated using a dedicated, phase-locked-loop (PLL) based compensation path.

The voltage magnitude and frequency setpoints are equal to the utility grid voltage magnitude and frequency in grid-tied mode or fixed to a given value in standalone mode or is provided by a droop1 static (e.g. frequency vs. inverter active power P produced and voltage magnitude vs. inverter reactive power Q exchanged).

Turning now to Fig. 19, relating to the case of a 3-phase power network, a pulse width modulator (PWM) 30 get as input values the voltages $u_1$, $u_2$, $u_3$ to be generated. The firing signals from the PWM 30 feed a basic voltage source inverter circuit 32, which is supplied with a DC supply voltage $U_{DC}$. The three-phase output of the circuit 32 is fed through a passive filter network 34 to the primary side of a power transformer 36. The secondary side of the power transformer 36 is connected through an electric power supply network to an electrical load 38 and a utility grid 40.

The three power supply phases $u_{1act}$, $u_{2act}$ and $u_{3act}$ are detected by sensors 42 and are fed into the compensation paths. The feedback network provides a signal path 5001 dedicated to the fundamental frequency, as well as, parallel thereto, further signal paths 5005, 5007, 5011, 5013, 5017, ..., 50_n, each of which is adapted and dedicated to a specific harmonic frequency. Each signal path comprises a frequency filter 44 adapted to the respective frequency. Each filter path further comprises a frequency detector 46 adapted to the respective frequency. Moreover, each filter path comprises a controller 48 producing output variables that reduce the error between the signals entered as the process variables and the setpoints.

Each filter 44 receives the three power supply phases $u_{1act}$, $u_{2act}$, $u_{3act}$, filters them for the respective fundamental or harmonic frequency, and provides three filtered output signals $u_{1FIRm}$, $u_{2FIRm}$, $u_{3FIRm}$, where m is 1 for the fundamental or 5, 7, 11, etc. for the harmonics.

Each frequency detector 46 comprises a PLL, adapted and dedicated to the respective frequency. Each PLL receives the FIR filter outputs $u_{1FIRm}$, $u_{2FIRm}$, $u_{3FIRm}$ and a respective frequency setpoint ($f_{SetpOrdm}$) as inputs. The outputs $u_{dOrdm}$, $u_{qOrdm}$ of each frequency detector 46 correspond to the direct and quadrature components of the voltage at the respective frequency.

Each controller 48 comprises a PI controller. Each PI controller is adapted and dedicated to the respective frequency. Each PI controller receives the outputs of the corresponding frequency detector 46 and a voltage setpoint (defined by the direct component setpoint $u_{dSetpOrdm}$ and the quadrature component setpoint $u_{qSetpOrdm}$ in the Park coordinates system). In response to the signals received, each PI controller outputs voltages $u_{dCtrlOutOrdm}$ and $u_{qCtrlOutOrdm}$ corresponding to the direct and quadrature components of the compensation output voltage in the Park coordinates system. Since each PLL controller inherently transforms the input voltages into a reference frame synchronized with the utility frequency, both a PARK inverse function 52 and a CLARK inverse function 54 are provided to transform the PI controller output back into three sinusoidal signals $u_{1Ordm}$, $u_{2Ordm}$, $u_{3Ordm}$ spaced by 120° (with respect to the fundamental frequency).

The output signals $u_{1Ordm}$, $u_{2Ordm}$, $u_{3Ordm}$ are fed into respective summing networks, which compute $u_1 = \sum_m u_{1Ordm}$, $u_2 = \sum_m u_{2Ordm}$ and $u_3 = \sum_m u_{3Ordm}$, respectively. The resulting voltages $u_1$, $u_2$ and $u_3$ are fed into the PWM 30.

Fig. 20 relates to the case of a 1-phase power network or grid. In this case, the $3^{rd}$ harmonic needs to be compensated. A pulse width modulator (PWM) 60 gets as input value the voltage u to be generated. The firing signals produced by the PWM 60 feed a single-phase voltage source inverter circuit 62, which is supplied with a supply voltage $U_{DC}$. The single-phase output of circuit 62 is fed through a passive filter network 64 to the primary side of a power transformer 66. The secondary side of the power transformer 66 is connected through an electric power supply network to an electrical load 68 and a utility grid 70.

The power supply phase $u_{act}$ is detected by sensor 72 and is fed into the compensation paths. The feedback network provides a signal path 8001 dedicated to the fundamental frequency, as well as, parallel thereto, further signal paths 8003, 8005,... 80_m, each of which is adapted and dedicated to a specific harmonic frequency. Each signal path comprises a frequency filter 74 adapted to the respective frequency. Each filter path further comprises a frequency detector 76 adapted to the respective frequency. Moreover, each filter path comprises a controller 78 producing output variables that reduce the error between the signals entered as the process variables and the setpoints.

Each filter 74 filters the single phase power supply voltage $u_{act}$ so as to extract the respective fundamental or harmonic frequency, and provides a filtered output signal $u_{FIRk}$, where k is 1 for the fundamental or 3, 5, 7, etc. for the harmonics.

Each frequency detector 76 comprises a PLL, adapted and dedicated to the respective frequency. Each PLL receives the FIR filter outputs $u_{FIRk}$ and a respective frequency setpoint ($f_{SetpOrdk}$) as inputs. The outputs $u_{dOrdk}$, $u_{qOrdk}$ of each frequency detector 76 correspond to the direct and quadrature components of the voltage at the respective frequency.

Each controller 78 comprises a PI controller adapted and dedicated to the respective frequency. Each PI controller receives the outputs of the corresponding frequency detector 76 and a voltage setpoint (defined by the direct component setpoint $u_{dSetpOrdk}$ and the quadrature component setpoint $u_{qSetpOrdk}$). In response to the signals received, each PI controller outputs voltages $u_{dCtrlOutOrdk}$ and $u_{qCtrlOutOrdk}$ corresponding to the direct and quadrature components of the compensation output voltage. Since each PLL controller inherently transforms the input voltages into a reference frame synchronized with the utility frequency, a Polar-to-Cartesian transformation 82 is provided to transform the PI controller output into a sinusoidal signal $u_{Ordk}$. $u_{dCtrlOutOrdk}$ and $u_{qCtrlOutOrdk}$ are the two components of the voltage vector in a coordinates system rotated by angle $\rho_{Ordk}$. The voltage vector is thus represented through its polar Coordinates, i.e. its magnitude $u_{Ordk} = u_{CtrlOutOrdk} = \sqrt{u_{dCrtlOutOrdk}^2 + u_{qCrtlOutOrdk}^2}$ and its angle

$\theta_{Ordk} = \operatorname{atan}\left(\dfrac{u_{qCrtlOutOrdk}}{u_{dCrtlOutOrdk}}\right) + \rho_{Ordk}.$ The Polar-to-Cartesian transform returns the sine and cosine components in the fixed coordinates system, of which the sine component is the 1-phase sinusoidal wave that is sent to the PWM.

The output signals $u_{Ordk}$ are fed into a summing network, which computes $u = \sum_k u_{Ordk}$. The resulting voltage u is fed into the PWM 60.

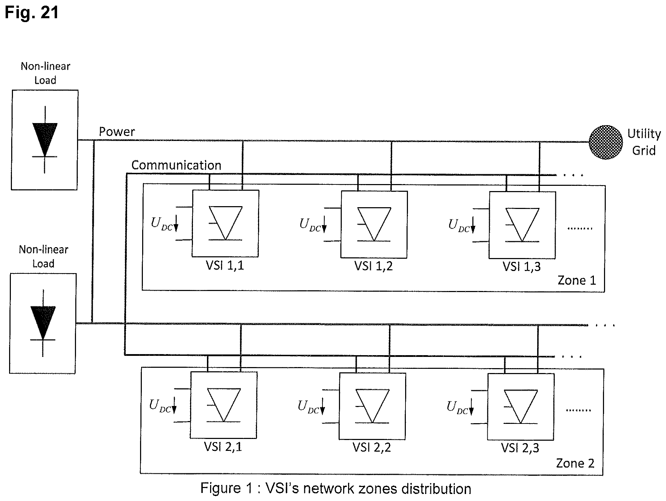

Fig. 21 illustrates a power network, wherein the VSIs are organised in zones. In each zone, the VSIs form a cluster with one central control unit (or one master VSI). In case of need, the VSIs of one zone can contribute to the harmonics compensation of another zone, for instance, when the VSI's of that zone do not have enough power available to compensate all the harmonics. A zone of VSIs may be defined by a given maximum distance of the VSIs to each other. The total compensation power in one zone is the sum of all the compensation powers provided by the VSIs of that zone.

Every VSI communicates its currently produced compensation power to the master VSI or to the control unit, which calculates the total compensation power, ranks the VSIs in accordance with their compensation powers, determines the variations of the power coefficients and sends the corresponding instructions to the VSIs of its zone.

It should be noted that the VSIs may be configured to be able to take both the role of the master VSI and the role of the slave VSI. In that case, a conflict resolution algorithm may be used to establish that there is only one master VSI per cluster or zone. All but one VSI equipped for acting as the control unit are then switched into slave mode. If the current master VSI fails (stops working or stops communicating), one of the remaining VSIs with master capability may take over the master tasks. Again, the conflict resolution algorithm may be used to determine which one of the remaining VSIs becomes the master.

According to a preferred embodiment of the control unit, if one or several VSIs operate in limited power mode ($q_{i,m}$ <1), e.g. for lack of available primary energy, the optimisation algorithm may set their power coefficients sequentially to a still lower level in order to determine their contribution in the total compensation power balance. If the total compensation power becomes worse, the optimisation algorithm sets the related power coefficient to its original value.

While specific embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims.

**Claims**

1. A power inverter for converting one or more source currents or voltages into one or more alternating currents or voltages to be injected into an electrical supply grid, the power inverter comprising
   a harmonics compensator configured to detect one or more harmonics of the fundamental frequency of the electrical supply grid and to control the one or more alternating currents or voltages to be injected into the electrical supply grid in such a way as to selectively modify the voltage of at least one of the one or more detected harmonics in accordance with one or more respective targets;
   wherein the power inverter comprises a communication interface to join a network of power inverters;
   and the harmonics compensator is connected to the communication interface and configured to share operating parameters over the network and to adjust the one or more targets depending on instructions and/or operating parameters communicated to it via the network,
   **characterised in that** the operating parameters comprise the powers the power inverter delivers to the electrical supply grid at each of the one or more harmonics.

2. The power inverter as claimed in claim 1, wherein the harmonics compensator comprises a plurality of harmonics control loops, each harmonics control loop being configured to control the voltage of a specific harmonic.

3. The power inverter as claimed in claim 2, wherein the one or more targets are the setpoints of the harmonics control loops.

4. A control unit for controlling a network of power inverters as claimed in any one of claims 1 to 3, comprising
   a communication interface for communicating with the power inverters of the network and for receiving operating parameters of the power inverters shared by them over the network;
   a processor connected to the communication interface, the processor being configured to evaluate an objective function using the received operating parameters, and to dispatch instructions to power inverters of the network to provoke variations of the objective function, the instructions causing the power inverters of the network to adjust the one or more targets in accordance with which they modify the voltage of at least one of the one or more harmonics they detect, **characterised in that**
   the operating parameters comprise the powers each power inverter delivers to the electrical supply grid at each of the one or more harmonics;
   the objective function reflects the total apparent power delivered by the power inverters at each one of the one or more harmonics, respectively; and
   the processor is configured to generate the instructions in accordance with an optimisation algorithm minimizing the total apparent power delivered by the power inverters at each one of the one or more harmonics, respectively.

5. The control unit as claimed in claim 4, wherein the processor is configured to generate the instructions in accordance with an optimisation algorithm concerning the objective function.

6. The control unit as claimed in claim 5, wherein the targets of the power inverters of the network define an operational state of the network, and wherein the processor is configured to dispatch candidate instructions in an iterative manner to detect a variation of a current operational state that implies an improvement in terms of the objective function and to update the current operational state when such a variation is detected.

7. The control unit as claimed in claim 5 or 6, wherein the processor is configured to evaluate the objective function separately for each harmonic and to optimise the objective function for each harmonic.

8. The control unit as claimed in any one of claims 6 to 7, wherein the processor is configured to maintain, for each harmonic, a schedule defining an order according to which the processor dispatches candidate instructions to the power inverters of the network, the processor being further configured to modify the schedule depending on the operating parameters shared by the power inverters.

9. The control unit as claimed in any one of claims 4 to 8, wherein the processor is configured to maintain, for each harmonic, a ranking of the power inverters of the network in accordance with the electric power delivered by the power inverters at that harmonic, the processor being configured, for each harmonic, to dispatch candidate instructions more frequently to power inverters with a higher ranking than to power inverters with a lower ranking.

10. A power inverter as claimed in any one of claims 1 to 3, comprising a control unit as claimed in any one of claims 4 to 9.

11. The power inverter as claimed in claim 10, wherein the control unit is configured to be placed into a master mode, in which the processor evaluates the objective function and dispatches instructions to power inverters of the network, and into a slave mode, in which the processor does not dispatch instructions to power inverters of the network.

12. A network of power inverters, comprising:

a plurality of power inverters as claimed in any one of claims 1 to 3, and
at least one control unit as claimed in any one of claims 4 to 9 or at least one power inverter as claimed in claim 10 or 11.

**Patentansprüche**

1. Wechselrichter zum Umwandeln eines oder mehrerer Quellströme oder einer oder mehrerer Quellspannungen in einen oder mehrere Wechselströme oder eine oder mehrere Wechselspannungen, die in ein elektrisches Versorgungsnetz injiziert werden sollen, wobei der Wechselrichter Folgendes umfasst:

einen Oberschwingungskompensator, der dazu ausgelegt ist, eine oder mehrere Oberschwingungen der Grundfrequenz des elektrischen Versorgungsnetzes zu detektieren und den einen oder die mehreren Wechselströme oder die eine oder die mehreren Wechselspannungen, die in das elektrische Versorgungsnetz injiziert werden sollen, auf eine derartige Weise zu steuern, dass die Spannung von mindestens einer der einen oder der mehreren detektierten Oberschwingungen gemäß einem oder mehreren jeweiligen Zielen selektiv modifiziert wird;
wobei
der Wechselrichter eine Kommunikationsschnittstelle umfasst, um ein Netzwerk von Wechselrichtern zu verbinden;
und der Oberschwingungskompensator mit der Kommunikationsschnittstelle verbunden ist und dazu ausgelegt ist, Betriebsparameter über das Netzwerk zu teilen und das eine oder die mehreren Ziele in Abhängigkeit von Anweisungen und/oder Betriebsparametern, die über das Netzwerk zu ihm kommuniziert werden, anzupassen, **dadurch gekennzeichnet, dass** die Betriebsparameter die Leistungen umfassen, die der Wechselrichter bei jeder der einen oder der mehreren Oberschwingungen dem elektrischen Versorgungsnetz liefert.

2. Wechselrichter nach Anspruch 1, wobei der Oberschwingungskompensator mehrere Oberschwingungsregelkreise umfasst, wobei jeder Oberschwingungsregelkreis dazu ausgelegt ist, die Spannung einer spezifischen Oberschwingung zu regeln.

3. Wechselrichter nach Anspruch 2, wobei das eine oder die mehreren Ziele die Sollwerte der Oberschwingungsregelkreise sind.

4. Steuereinheit zum Steuern eines Netzwerks von Wechselrichtern nach einem der Ansprüche 1 bis 3, umfassend:

eine Kommunikationsschnittstelle zum Kommunizieren mit den Wechselrichtern des Netzwerks und zum Empfangen von Betriebsparametern der Wechselrichter, die durch diese über das Netzwerk geteilt werden;
einen Prozessor, der mit der Kommunikationsschnittstelle verbunden ist, wobei der Prozessor dazu ausgelegt ist, eine Zielfunktion unter Verwendung der empfangenen Betriebsparameter zu evaluieren und Anweisungen zu Wechselrichtern des Netzwerks zu senden, um Variationen der Zielfunktion auszulösen, wobei die Anweisungen bewirken, dass die Wechselrichter des Netzwerks das eine oder die mehreren Ziele gemäß dem anpassen, wie sie die Spannung von mindestens einer der einen oder der mehreren Oberschwingungen, die sie detektieren, modifizieren,

**dadurch gekennzeichnet, dass**

die Betriebsparameter die Leistungen umfassen, die jeder Wechselrichter bei jeder der einen oder der mehreren Oberschwingungen dem elektrischen Versorgungsnetz liefert;

die Zielfunktion die Gesamtscheinleistung widerspiegelt, die durch die Wechselrichter bei jeder der einen oder der mehreren Oberschwingungen jeweils geliefert wird; und

der Prozessor dazu ausgelegt ist, die Anweisungen gemäß einem Optimierungsalgorithmus zu erzeugen, der die Gesamtscheinleistung, die durch die Wechselrichter bei jeder der einen oder der mehreren Oberschwingungen jeweils geliefert wird, minimiert.

**5.** Steuereinheit nach Anspruch 4, wobei der Prozessor dazu ausgelegt ist, die Anweisungen gemäß einem Optimierungsalgorithmus hinsichtlich der Zielfunktion zu erzeugen.

**6.** Steuereinheit nach Anspruch 5, wobei die Ziele der Wechselrichter des Netzwerks einen Betriebszustand des Netzwerks definieren und wobei der Prozessor dazu ausgelegt ist, Kandidatenanweisungen auf eine iterative Art und Weise zu senden, um eine Variation eines gegenwärtigen Betriebszustands zu detektieren, die eine Verbesserung hinsichtlich der Zielfunktion andeutet, und den gegenwärtigen Betriebszustand zu aktualisieren, wenn eine derartige Variation detektiert wird.

**7.** Steuereinheit nach Anspruch 5 oder 6, wobei der Prozessor dazu ausgelegt ist, die Zielfunktion separat für jede Oberschwingung zu evaluieren und die Zielfunktion für jede Oberschwingung zu optimieren.

**8.** Steuereinheit nach einem der Ansprüche 6 bis 7, wobei der Prozessor dazu ausgelegt ist, für jede Oberschwingung einen Zeitplan zu verwalten, der eine Reihenfolge definiert, gemäß der der Prozessor Kandidatenanweisungen zu den Wechselrichtern des Netzwerks sendet, wobei der Prozessor ferner dazu ausgelegt ist, den Zeitplan in Abhängigkeit von den Betriebsparametern, die durch die Wechselrichter geteilt werden, zu modifizieren.

**9.** Steuereinheit nach einem der Ansprüche 4 bis 8, wobei der Prozessor dazu ausgelegt ist, für jede Oberschwingung eine Einstufung der Wechselrichter des Netzwerks gemäß der durch die Wechselrichter bei dieser Oberschwingung gelieferten elektrischen Leistung zu verwalten, wobei der Prozessor dazu ausgelegt ist, für jede Oberschwingung Kandidatenanweisungen häufiger zu Wechselrichtern mit einer höheren Einstufung als zu Wechselrichtern mit einer niedrigeren Einstufung zu senden.

**10.** Wechselrichter nach einem der Ansprüche 1 bis 3, der eine Steuereinheit nach einem der Ansprüche 4 bis 9 umfasst.

**11.** Wechselrichter nach Anspruch 10, wobei die Steuereinheit dazu ausgelegt ist, in einen Master-Modus platziert zu werden, bei dem der Prozessor die Zielfunktion evaluiert und Anweisungen zu Wechselrichtern des Netzwerks sendet, und in einen Slave-Modus platziert zu werden, bei dem der Prozessor keine Anweisungen zu Wechselrichtern des Netzwerks sendet.

**12.** Netzwerk von Wechselrichtern, umfassend:

mehrere Wechselrichter nach einem der Ansprüche 1 bis 3, und

mindestens eine Steuereinheit nach einem der Ansprüche 4 bis 9 oder mindestens einen Wechselrichter nach Anspruch 10 oder 11.

**Revendications**

**1.** Onduleur de puissance pour convertir un ou plusieurs courants de source ou une ou plusieurs tensions de source en un ou plusieurs courants alternatifs ou en une ou plusieurs tensions alternatives à injecter dans un réseau d'alimentation électrique, l'onduleur de puissance comprenant :

un compensateur d'harmoniques configuré pour détecter un ou plusieurs harmoniques de la fréquence fondamentale du réseau d'alimentation électrique et

pour commander le ou les courants alternatifs ou la ou les tensions alternatives à injecter dans le réseau d'alimentation électrique de telle manière à modifier de manière sélective la tension de l'harmonique ou d'au moins un harmonique des harmoniques détectés en fonction d'une ou de plusieurs cibles respectives ;

dans lequel l'onduleur de puissance comprend une interface de communication pour relier un réseau d'onduleurs de puissance ;

et le compensateur d'harmoniques est raccordé à l'interface de communication et configuré pour partager des paramètres de fonctionnement sur le réseau et pour régler la ou les cibles en fonction d'instructions et/ou de paramètres de fonctionnement communiqués à ce dernier par le biais du réseau,

**caractérisé en ce que** les paramètres de fonctionnement comprennent les puissances que l'onduleur de puissance délivre au réseau d'alimentation électrique à l'harmonique ou chacun des harmoniques.

2. Onduleur de puissance selon la revendication 1, dans lequel le compensateur d'harmoniques comprend une pluralité de boucles de commande d'harmoniques, chaque boucle de commande d'harmoniques étant configurée pour réguler la tension d'un harmonique spécifique.

3. Onduleur de puissance selon la revendication 2, dans lequel la ou les cibles sont les valeurs de consigne des boucles de commande d'harmoniques.

4. Unité de commande pour commander un réseau d'onduleurs de puissance selon l'une quelconque des revendications 1 à 3 comprenant :

une interface de communication pour communiquer avec les onduleurs de puissance du réseau et pour recevoir des paramètres de fonctionnement des onduleurs de puissance partagés par eux sur le réseau ;

un processeur raccordé à l'interface de communication, le processeur étant configuré pour évaluer une fonction objective à l'aide des paramètres de fonctionnement reçus, et pour envoyer des instructions à des onduleurs de puissance du réseau pour provoquer des variations de la fonction objective, les instructions contraignant les onduleurs de puissance du réseau à régler la ou les cibles en fonction desquelles ils modifient la tension de l'harmonique ou d'au moins un harmonique des harmoniques qu'ils détectent,

**caractérisée en ce que**

les paramètres de fonctionnement comprennent les puissances que chaque onduleur de puissance délivre au réseau d'alimentation électrique au niveau de l'harmonique ou de chacun des harmoniques ;

la fonction objective reflète la puissance apparente totale délivrée par les onduleurs de puissance au niveau de l'harmonique ou de chacun des harmoniques, respectivement ; et

le processeur est configuré pour générer les instructions en fonction d'un algorithme d'optimisation réduisant à un minimum la puissance apparente totale délivrée par les onduleurs de puissance au niveau de l'harmonique ou de chacun des harmoniques, respectivement.

5. Unité de commande selon la revendication 4, dans laquelle le processeur est configuré pour générer les instructions en fonction d'un algorithme d'optimisation concernant la fonction objective.

6. Unité de commande selon la revendication 5, dans laquelle les cibles des onduleurs de puissance du réseau définissent un état fonctionnel du réseau et dans laquelle le processeur est configuré pour envoyer des instructions potentielles de manière itérative pour détecter une variation d'un état fonctionnel actuel qui implique une amélioration en termes de fonction objective et pour mettre à jour l'état fonctionnel actuel lorsqu'une telle variation est détectée.

7. Unité de commande selon la revendication 5 ou 6, dans laquelle le processeur est configuré pour évaluer la fonction objective de manière séparée pour chaque harmonique et pour optimiser la fonction objective pour chaque harmonique.

8. Unité de commande selon l'une quelconque des revendications 6 et 7, dans laquelle le processeur est configuré pour garder, pour chaque harmonique, un calendrier définissant un ordre en fonction duquel le processeur envoie des instructions potentielles aux onduleurs de puissance du réseau, le processeur étant en outre configuré pour modifier le calendrier en fonction des paramètres de fonctionnement partagés par les onduleurs de puissance.

9. Unité de commande selon l'une quelconque des revendications 4 à 8, dans laquelle le processeur est configuré pour garder, pour chaque harmonique, un classement des onduleurs de puissance du réseau en fonction de l'énergie électrique délivrée par les onduleurs de puissance au niveau de cet harmonique, le processeur étant configuré, pour chaque harmonique, pour envoyer des instructions potentielles de manière plus fréquente à des onduleurs de puissance ayant un classement plus élevé qu'à des onduleurs de puissance ayant un classement plus bas.

10. Onduleur de puissance selon l'une quelconque des revendications 1 à 3, comprenant une unité de commande selon l'une quelconque des revendications 4 à 9.

11. Onduleur de puissance selon la revendication 10, dans lequel l'unité de commande est configurée pour être placée dans un mode maître, dans lequel le processeur évalue la fonction objective et envoie des instructions à des onduleurs de puissance du réseau, et dans un mode esclave, dans lequel le processeur n'envoie pas d'instructions à des onduleurs de puissance du réseau.

12. Réseau d'onduleurs de puissance, comprenant :

une pluralité d'onduleurs de puissance selon l'une quelconque des revendications 1 à 3, et
au moins une unité de commande selon l'une quelconque des revendications 4 à 9 ou au moins un onduleur de puissance selon la revendication 10 ou 11.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

Figure 1 : VSI's network zones distribution

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0965159 B1
- EP 1079493 B1
- EP 2437383 A2
- WO 1997049168 A1
- WO 2011032287 A1
- WO 2002041463 A3
- DE 10032447 A1
- DE 19819869 A1
- US 5648894 A
- EP 2065994 A2

### Non-patent literature cited in the description

- **A. PRASAD ; P. ZOGIAS ; S. MANIAS.** An Active Power Factor Compensation Correction Technique for Three-Phase Diode Rectifiers. *IEEE Transactions on Power Electronics,* January 1991, vol. 6 (1
- **F. WANG ; M BENHABIB ; J. DUARTE ; M. HENDRIX.** High Performance Stationary Frame Filters for Symmetrical Sequences or Harmonics Separation under a Variety of Grid Conditions. *IEEE proposes a positive-negative sequence filter cell to extract specific harmonics by damping the others*
- **L. MORAN ; J. DIXON ; R. WALLACE.** A Three-phase Active Power Filter Operating with Fixed Switching Frequency for Reactive Power and Current Harmonic Compensation. *IEEE Transactions on Industrial Electronics,* August 1995, vol. 42 (4
- **D. YAZDANI ; A. BAKHSHAI ; P. JAIN.** A Three-Phase Adaptive Notch Filter-Based Approach to Harmonic/Reactive Current Extraction and Harmonic Decomposition. *IEEE Transactions on Power Electronics,* January 2010, vol. 25 (4
- **A. SALAMAH ; S. FINNEY ; B. WILLIAMS.** Three-phase phase-lock loop for distorted utilities. *IET Electrical Power Applications,* 2007, vol. 1 (6), 937-945
- **C. MARQUES ; M. RIBEIRO ; C. DUQUE ; P. RIBEIRO ; E. DA SILVA.** A Controlled Filtering Method for Estimating Harmonics of Off-Nominal Frequencies. *IEEE Transactions on Smart Grid,* March 2012, vol. 3 (1
- **B. REN ; Y. ZHONG ; X. SUN ; X. TONG.** IEEE proposes to apply a phase-shifted FIR filter to the voltage or current signal to determine a fictitious 2nd phase of a single-phase voltage source in order to be able to perform then a PLL. *A Digital PLL Control Method Based on the FIR Filter for a Grid-Connected Single-Phase Power Conversion System*
- **CALDOGNETTO TOMMASO et al.** Improving Microgrid Performance by Cooperative Control Of Distributed Energy Sources. *IEEE Transactions On Industry Applications,* 01 November 2014, vol. 50 (6